# EUROPEAN PATENT SPECIFICATION

(11) **EP 3 715 234 B1**
(45) Date of publication and mention of the grant of the patent: **08.06.2022**
(21) Application number: 20166496.8
(22) Date of filing: 27.03.2020
(51) Int. Cl.: B62J 17/06, B60T 8/176, B62K 19/30, B62L 3/02

(54) **SADDLE-TYPE VEHICLE**
SATTELFAHRZEUG
VÉHICULE DE TYPE À ENFOURCHER

(30) Priority: 28.03.2019 JP 2019062634
(43) Date of publication of application: 30.09.2020
(73) Proprietor: HONDA MOTOR CO., LTD., Minato-ku Tokyo 107-8556 (JP)
(72) Inventor: NAKAMURA, Masanori, Wako-shi, Saitama 351-0193 (JP); MOUNGTHAI, Issara, 10520 Bangkok (TH)
(74) Representative: Dehns

(56) References cited:
- DE-A1-102007 045 994
- JP-A- 2008 074 206
- JP-A- 2012 206 673
- JP-A- 2019 001 208
- US-A1- 2015 217 686

## Description

### BACKGROUND OF THE INVENTION

### Field of the Invention:

The present invention relates to a saddle-type vehicle with an ABS modulator for adjusting the braking force of a brake device.

### Description of the Related Art:

Japanese Laid-Open Patent Publication No. 2005-178632 discloses a structure for a scooter-type vehicle that has an ABS unit placed behind a head pipe and between a pair of right and left upper frames.

JP 2012/206673 A shows the preamble of claim 1 and discloses a motorcycle equipped with an ABS (antilock braking system) module.

### SUMMARY OF THE INVENTION

When an ABS modulator (ABS unit) is placed between a pair of right and left upper frames, its attachment and detachment become complicated and the degree of freedom in the design of a body frame is reduced as well. Thus, a new location of placement is desired.

The present invention was made to address this challenge and at least the preferred embodiments seek to provide a saddle-type vehicle that facilitates the attachment and detachment of an ABS modulator and also improves the degree of freedom in the design of the body frame. The invention is defined by the claims.

According to the invention a saddle-type vehicle is provided, comprising: a head pipe pivotally supporting a steering system; a down frame extending backward and downward from the head pipe; a leg shield covering the down frame and also covering legs of a rider from front; a front wheel mounted at a lower end of the steering system; a hydraulic brake device for applying braking force to the front wheel; and an ABS modulator for adjusting the braking force of the brake device; characterised in that the saddle-type vehicle comprises: a battery mounted in front of the head pipe; a fuse placed on the left side of the battery; and a main harness connected with the fuse; in that the ABS modulator is mounted on the down frame within the leg shield while being offset to the left side of the down frame in a right-left direction; and in that the main harness is laid so as to run in front of the battery toward the right side of the down frame in the right-left direction. The saddle-type vehicle may have the following preferred features.

A first preferred feature; a brake rubber tube extending upward from the brake device is clamped at one point by a clamp member attached to a bottom bridge, and the ABS modulator is placed at a position corresponding to a height of the clamp member.

A second preferred feature; a rear face portion of the leg shield has an area with a backwardly projecting profile in a cross section orthogonal to a vehicle width direction, and the ABS modulator is placed in correspondence to a position of the area with the backwardly projecting profile of the rear face portion of the leg shield.

A third preferred feature; the ABS modulator acts only on the front wheel, and the saddle-type vehicle includes the brake device only on a side where the ABS modulator is placed in a right-left direction of the front wheel.

A fourth preferred feature; the brake device is located on a left side of the front wheel; a first brake rubber tube extending from a front brake lever mounted on a right side of a handlebar connects to a first joint member which is fixedly supported on a left side of the head pipe; a first brake metal tube extending from the first joint member connects to the ABS modulator; a second brake metal tube extending from the ABS modulator connects to a second joint member which is fixedly supported on the left side of the head pipe; and a second brake rubber tube extends from the second joint member toward the brake device.

A fifth preferred feature; the second joint member is placed below the first joint member.

At least the preferred embodiments of the present invention facilitate the attachment and detachment of the ABS modulator and can improve the degree of freedom in the design of the body frame.

A preferred embodiment of the present invention will now be described by way of illustrative example only and with reference to the accompanying drawings, as set out below.

### BRIEF DESCRIPTION OF THE DRAWINGS

FIG. 1 is a left side view of a saddle-type vehicle;
FIG. 2 is a left side view of a portion of the saddle-type vehicle around the down frame;
FIG. 3 is a front view of a portion of the saddle-type vehicle around a steering stem and a handlebar;
FIG. 4 is a cross-sectional view taken along IV-IV in FIG. 1; and
FIG. 5 is a cross-sectional view taken along V-V in FIG. 4.

### DESCRIPTION OF THE PREFERRED EMBODIMENTS

### [First embodiment]

### [Structure of saddle-type vehicle]

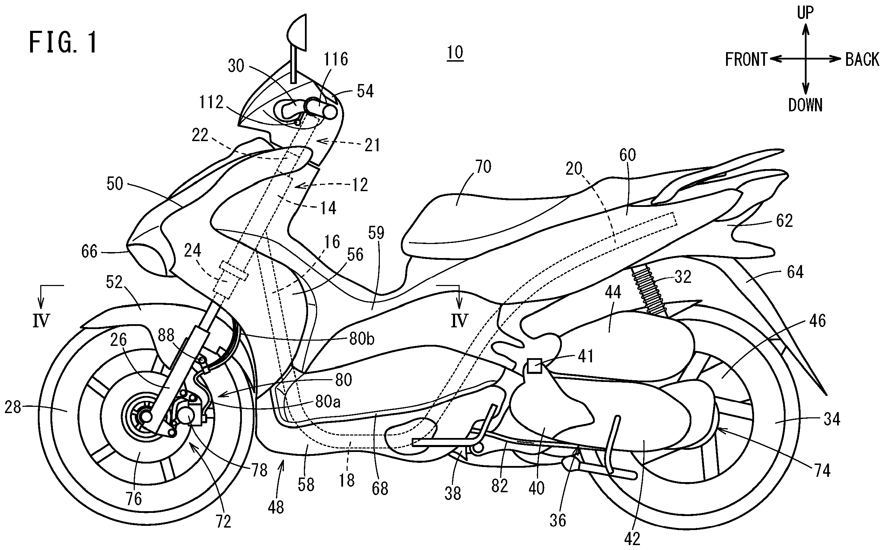

FIG. 1 is a left side view of a saddle-type vehicle 10. Hereinafter, front-back, right-left, and up-down directions are referred to based on the directions indicated in the drawings.

The saddle-type vehicle 10 is a scooter-type motorcycle. The saddle-type vehicle 10 may also be a three- or four-wheeled vehicle or the like instead of a two-wheeled vehicle. The saddle-type vehicle 10 may also be a vehicle other than scooter type.

The saddle-type vehicle 10 has a body frame 12. The body frame 12 includes a head pipe 14, a down frame 16, a lower frame 18, and a rear frame 20.

As a steering system 21, the saddle-type vehicle 10 has a steering stem 22, a bottom bridge 24, a front fork 26, and a handlebar 30. The head pipe 14 extends frontward and downward and pivotally supports the steering stem 22. A lower end of the steering stem 22 is connected with the upper ends of the pair of right and left front forks 26 via the bottom bridge 24. Each front fork 26 extends frontward and downward and pivotally supports a front wheel 28 at a lower end thereof. The handlebar 30 is mounted at an upper end of the steering stem 22.

The down frame 16 extends backward and downward from the head pipe 14. The lower frame 18 extends from a lower portion of each down frame 16 to the each of the right and the left and further extends backward. The rear frame 20 extends backward and upward from the back end of each of the right and left down frames 16.

A rear cushion 32 is mounted on the rear frame 20. The rear cushion 32 extends backward and downward and supports a power unit 36, described below, which pivotally supports a rear wheel 34 at its lower end.

The saddle-type vehicle 10 has the power unit 36 for generating driving power. The power unit 36 is disposed at a back end of the lower frame 18 via a link mechanism 38 so as to be movable in the up-down direction. The power unit 36 includes an engine 40, a transmission 42, and an air cleaner 44. The transmission 42 is disposed behind the engine 40 integrally with it. The air cleaner 44 is disposed above the transmission 42. On the right side of the saddle-type vehicle 10, a muffler 46 for discharging the exhaust of the engine 40 is mounted.

The body frame 12 is covered by a body cover 48 made of synthetic resin. The body cover 48 has a front cover 50, a front fender 52, a handle cover 54, a leg shield 56, a lower cover 58, a center tunnel 59, a side cover 60, a rear under cover 62, and a rear fender 64.

The front cover 50 is disposed so as to cover the head pipe 14. The front cover 50 is equipped with a headlight 66. The front fender 52 is disposed so as to cover the upper and back sides of the front wheel 28. The handle cover 54 is disposed so as to cover a central portion of the handlebar 30 and the steering stem 22. The leg shield 56 is disposed so as to cover the down frame 16 and also cover the legs of a rider from the front.

The lower cover 58 is disposed so as to cover the lower frame 18 provided on each of the right and left sides. On an upper surface of the lower cover 58, a step 68 is provided on each of the right and left sides. The center tunnel 59 is provided between the right and left steps 68. A fuel tank, not shown, is placed inside the center tunnel 59. The side cover 60 is disposed so as to cover the rear frame 20 provided on each of the right and left sides. A seat 70 is mounted at a top of the side cover 60. The rear under cover 62 is disposed so as to cover a portion of a lower opening of the side cover 60. The rear fender 64 is disposed so as to cover the upper and back sides of the rear wheel 34.

The saddle-type vehicle 10 has a front wheel brake device 72 for applying braking force to the front wheel 28 and a rear wheel brake device 74 for applying braking force to the rear wheel 34. The front wheel brake device 72 is placed on the left side of the saddle-type vehicle 10. The front wheel brake device 72 is a hydraulic disk brake and has a brake disk 76 which rotates integrally with the front wheel 28, and a caliper 78 disposed on the front fork 26. The caliper 78 is equipped with a brake rubber tube 80 for supplying brake fluid to the caliper 78. The brake rubber tube 80 is laid extending upward from the caliper 78. The rear wheel brake device 74 is a drum brake and is connected with a brake cable 82 extending from a rear brake lever 112 of the handlebar 30, which is described later.

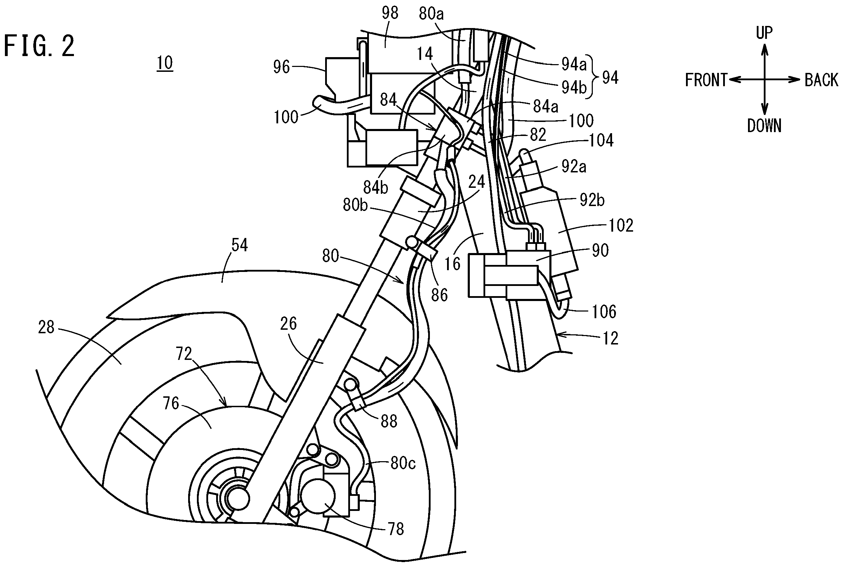

FIG. 2 is a left side view of a portion of the saddle-type vehicle 10 around the down frame 16. FIG. 2 shows the saddle-type vehicle 10 with the front cover 50 and the leg shield 56 removed.

The brake rubber tube 80 includes a first brake rubber tube 80a, a second brake rubber tube 80b, and a third brake rubber tube 80c. The first brake rubber tube 80a is laid extending from a front brake lever 108, described later, mounted on the right side of the handlebar 30, and is connected with a joint member 84 attached on the head pipe 14. The second brake rubber tube 80b is laid extending downward from the joint member 84, and at one point, is clamped by a clamp member 86 attached to the bottom bridge 24. The third brake rubber tube 80c is laid extending upward from the caliper 78, and at one point, is clamped by a clamp member 88 attached to the front fork 26. An upper end of the third brake rubber tube 80c is connected with a lower end of the second brake rubber tube 80b.

The saddle-type vehicle 10 has an ABS modulator 90 for adjusting the braking force of the front wheel brake device 72 of the front wheel 28. The ABS modulator 90 is a modulator used for a so-called one-channel ABS; it acts only on the front wheel 28 and not on the rear wheel 34.

The ABS modulator 90 may optionally provide brake assist. Brake assist refers to increasing and multiplying brake fluid pressure with a motor (not shown) of the ABS modulator 90 when an emergency situation is determined so as to assist with the braking force of the front wheel brake device 72 with respect to an operational input to the front brake lever 108 by the rider, described later. In this case, it is determined that an emergency situation exists when the operation speed of the front brake lever 108 is high.

Additionally, an emergency situation may also be determined when the operational speed of the rear brake lever 112, described later, is high. In such a case, even if the operational speed of the front brake lever 108 is low, the brake fluid pressure is increased and multiplied with the motor of the ABS modulator 90 so as to assist with the braking force of the front wheel brake device 72 as described above when the operational speed of the rear brake lever 112 is high.

Alternatively, when the operational speed of the rear brake lever 112 is high and an emergency situation is determined and if the front brake lever 108 is not being operated, pressure may be applied to the front wheel brake device 72 so that the brake pad (not shown) of the caliper 78 comes into contact with the brake disk 76 beforehand.

The ABS modulator 90 is placed on the left side of the down frame 16 and at a position corresponding to the height at which the second brake rubber tube 80b is clamped to the bottom bridge 24 by the clamp member 86 in the up-down direction. A first brake metal tube 92a and a second brake metal tube 92b are laid extending upward from the ABS modulator 90. The upper ends of the first brake metal tube 92a and the second brake metal tube 92b are connected with the joint member 84.

The joint member 84 includes a first joint member 84a and a second joint member 84b placed below the first joint member 84a. The first joint member 84a is connected with the first brake rubber tube 80a and the first brake metal tube 92a. The first joint member 84a has an oil channel inside it, and this oil channel communicates between the first brake rubber tube 80a and the first brake metal tube 92a. The second joint member 84b is connected with the second brake rubber tube 80b and the second brake metal tube 92b. The second joint member 84b has an oil channel inside it, and this oil channel communicates between the second brake rubber tube 80b and the second brake metal tube 92b.

On the left side of the down frame 16, the brake cable 82 for adjusting the braking force of the rear wheel brake device 74 of the rear wheel 34 is laid extending downward along the down frame 16.

On the left side of the down frame 16, a throttle cable 94 for adjusting the degree of opening of a throttle valve (not shown) of the engine 40 is laid extending downward along the down frame 16. The saddle-type vehicle 10 has two throttle cables 94: a pulling-side throttle cable 94a and a returning-side throttle cable 94b.

On the right side of the down frame 16, a regulator 102 is mounted. A wire 104 is connected to an upper portion of the regulator 102, the regulator 102 being connected with a fuse 98 by the wire 104. A wire 106 is connected to a lower portion of the regulator 102, the regulator 102 being connected with the ABS modulator 90 by the wire 106. Electricity is supplied to the ABS modulator 90 from the regulator 102 over the wire 106.

On the right side of the down frame 16, a main harness 100, described later, is laid extending downward along the down frame 16.

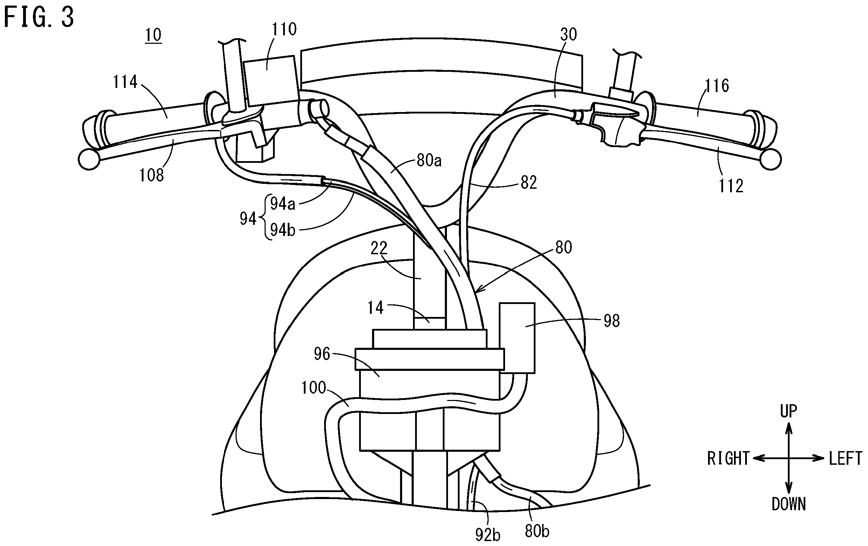

FIG. 3 is a front view of a portion of the saddle-type vehicle 10 around the steering stem 22 and the handlebar 30. FIG. 3 shows the saddle-type vehicle 10 with the front cover 50 and the handle cover 54 removed therefrom.

On the right side of the handlebar 30, the front brake lever 108 is mounted. The front brake lever 108 is provided integrally with a master cylinder 110. The first brake rubber tube 80a extending from the front brake lever 108 is guided to the left of the steering stem 22 and then laid extending downward.

On the left side of the handlebar 30, the rear brake lever 112 is mounted. The brake cable 82 extending from the rear brake lever 112 is guided to the left of the steering stem 22 and then laid extending downward.

On the right side of the handlebar 30, a throttle pipe 114 is mounted. The throttle cables 94 (the pulling-side throttle cable 94a and the returning-side throttle cable 94b) extending from the throttle pipe 114 are guided to the left of the steering stem 22 and then laid extending downward.

A battery 96 is mounted in front of the head pipe 14. The fuse 98 is placed on the left side of the battery 96. The fuse 98 is connected with the main harness 100. The main harness 100 is laid so as to run in front of the battery 96 toward the right side of the down frame 16.

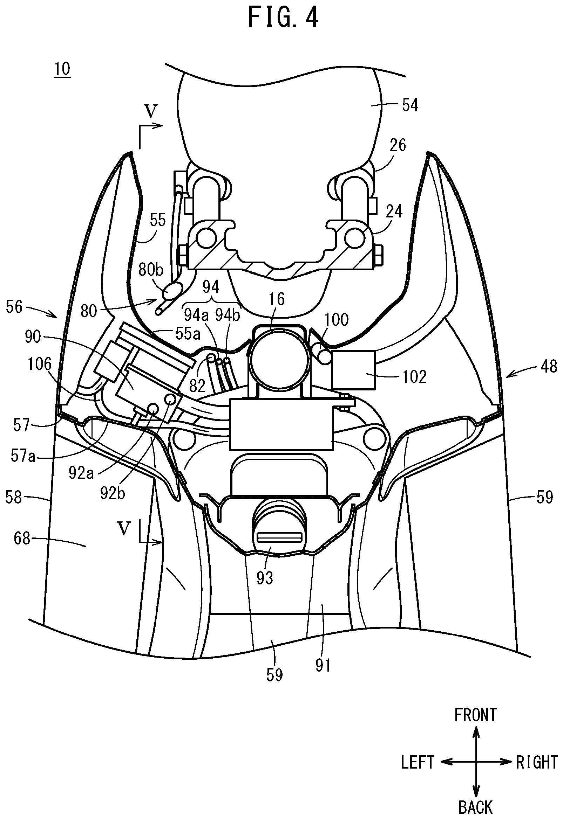

FIG. 4 is a cross-sectional view of the saddle-type vehicle 10. The cross section shown in FIG. 4 is taken at line IV-IV in FIG. 1, representing a cross section taken in a plane passing above the ABS modulator 90 and perpendicular to the up-down direction of the saddle-type vehicle 10 (that is, the horizontal plane).

The ABS modulator 90 is placed in the leg shield 56 and is mounted on the down frame 16 while being offset to the left side of the down frame 16.

A front face portion 55 and a rear face portion 57 of the leg shield 56 are shaped with inclinations such that they are located further frontward as they extend from the center in the vehicle width direction to the outer side.

The ABS modulator 90 is placed obliquely along the inclinations of the front face portion 55 and the rear face portion 57 of the leg shield 56 such that the ABS modulator 90 is located further frontward as it extends from the center in the vehicle width direction to the outer side.

The center tunnel 59 has a lid 91. Below the lid 91, an inlet 93 through which fuel is injected into the fuel tank is provided.

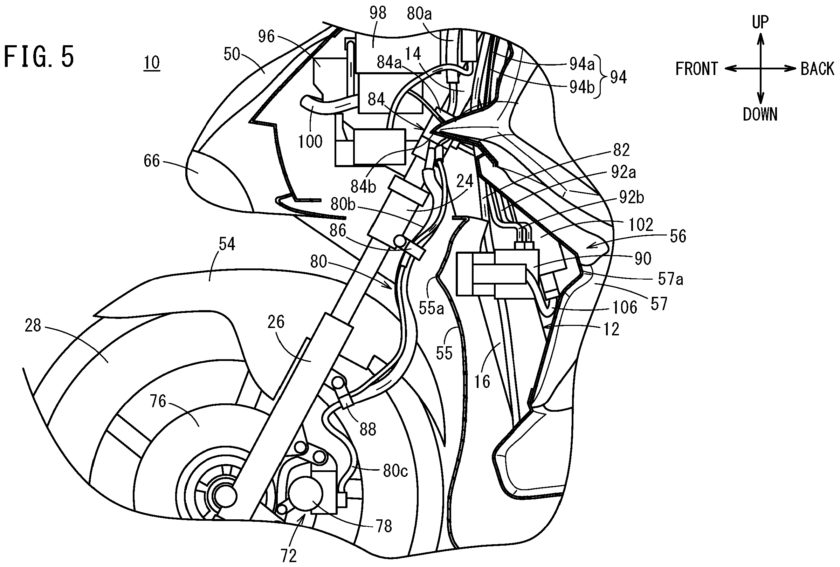

FIG. 5 is a cross-sectional view of the saddle-type vehicle 10. The cross section shown in FIG. 5 is taken at line V-V in FIG. 4, representing a cross section taken in a plane passing near the outer side of the ABS modulator 90 in the vehicle width direction and perpendicular to the vehicle width direction of the saddle-type vehicle 10.

In the up-down direction, at a position corresponding to the height at which the second brake rubber tube 80b is clamped to the bottom bridge 24 by the clamp member 86, the front face portion 55 of the leg shield 56 has an area 55a with a frontwardly projecting profile. In the up-down direction, at a position corresponding to the height at which the second brake rubber tube 80b is clamped by the clamp member 86, the rear face portion 57 of the leg shield 56 has an area 57a with a backwardly projecting profile.

The ABS modulator 90 is placed, in the up-down direction, at a position corresponding to the position of the area 55a where the front face portion 55 of the leg shield 56 has a frontwardly projecting profile and the position of the area 57a where the rear face portion 57 of the leg shield 56 has a backwardly projecting profile.

Defining a plane that meets a tip of a handle pipe 116 attached on the left side of the handlebar 30, a tip of a left pillion step 41, and a left side surface of the front wheel 28, the ABS modulator 90 is positioned on the side closer to the center in the vehicle width direction relative to this plane.

### [Actions and effects]

For the saddle-type vehicle 10 having the ABS modulator 90, easiness of the attachment and detachment of the ABS modulator 90 is desired. It is also desired that the body frame 12 to which the ABS modulator 90 is mounted has a high degree of freedom in design.

Accordingly, in the saddle-type vehicle 10, the ABS modulator 90 is mounted on the down frame 16 within the leg shield 56 while being offset to the left side of the down frame 16. The main harness 100 is placed on the right side of the down frame 16, but the left side of the down frame 16 has conventionally been a dead space. By utilizing the dead space in the leg shield 56 to place the ABS modulator 90, the ABS modulator 90 can be provided in the saddle-type vehicle 10 without increasing the size of the saddle-type vehicle 10 or affecting the shape of the down frame 16.

In the saddle-type vehicle 10 of this embodiment, the ABS modulator 90 is placed at a position corresponding to the height at which the second brake rubber tube 80b is clamped to the bottom bridge 24 by the clamp member 86 in the up-down direction. A portion of the second brake rubber tube 80b that lies above the position of clamping by the clamp member 86 moves largely with manipulation of the handlebar 30. A portion of the second brake rubber tube 80b that lies below the position of clamping by the clamp member 86 moves largely with manipulation of the handlebar 30 and extension and contraction of the front fork 26. Further, since the second brake rubber tube 80b has flexibility, the movement of the portions above and below the position of clamping by the clamp member 86 is difficult to predict. In contrast, the portion of the second brake rubber tube 80b that is clamped by the clamp member 86 moves together with the bottom bridge 24, so that the range of its arc motion associated with the rotation of the bottom bridge 24 is limited and prediction of movement is easy. Accordingly, the position at which the second brake rubber tube 80b is clamped by the clamp member 86 is a position where space for placing the ABS modulator 90 is easily secured while considering a clearance with the brake rubber tube 80 and the leg shield 56. It thus facilitates downsizing the saddle-type vehicle 10.

Further, in the saddle-type vehicle 10 of this embodiment, the ABS modulator 90 is placed in correspondence to the position of the area 57a where the rear face portion 57 of the leg shield 56 has a backwardly projecting profile in the up-down direction. This permits the ABS modulator 90 to be placed in the leg shield 56 at a position with large space, facilitating the attachment of the ABS modulator 90.

In the saddle-type vehicle 10 of this embodiment, the ABS modulator 90 acts only on the front wheel 28, and the front wheel brake device 72 is placed on the left side of the front wheel 28 and the ABS modulator 90 is placed on the left side of the down frame 16. This can reduce the length of the brake tube between the ABS modulator 90 and the front wheel brake device 72. Thus, brake control can be simplified.

Further, in the saddle-type vehicle 10 of this embodiment, the second joint member 84b is placed below the first joint member 84a. The first joint member 84a is connected with the first brake rubber tube 80a extending from the front brake lever 108 above, and the second joint member 84b is connected with the second brake rubber tube 80b, which is connected with the third brake rubber tube 80c below. Thus, the brake rubber tube 80 can be shortened.

In the saddle-type vehicle 10 of this embodiment, the front face portion 55 and the rear face portion 57 of the leg shield 56 are shaped with inclinations such that they are located further frontward as they extend from the center in the vehicle width direction to the outer side. The ABS modulator 90 is placed obliquely along the inclinations of the front face portion 55 and the rear face portion 57 of the leg shield 56 such that the ABS modulator 90 is located further frontward as it extends from the center in the vehicle width direction to the outer side. As a result of this, the space in the leg shield 56 for placing the ABS modulator 90 in the leg shield 56 can be compact.

## Claims

1. A saddle-type vehicle (10) comprising:
a head pipe (14) pivotally supporting a steering system (21) ;
a down frame (16) extending backward and downward from the head pipe (14);
a leg shield (56) covering the down frame (16) and also covering legs of a rider from front;
a front wheel (28) mounted at a lower end of the steering system (21);
a hydraulic brake device (72) for applying braking force to the front wheel (28); and
an ABS modulator (90) for adjusting the braking force of the brake device (72); and the ABS modulator is mounted on the down frame within the leg shield;
**characterised in that** the saddle-type vehicle comprises:
a battery (96) mounted in front of the head pipe (14);
a fuse (98) placed on the left side of the battery (96); and
a main harness (100) connected with the fuse (98);
**in that** the ABS modulator (90) is
offset to the left side of the down frame (16) in a right-left direction; and
**in that** the main harness (100) is laid so as to run in front of the battery (96) toward the right side of the down frame (16) in the right-left direction.

2. A saddle-type vehicle (10) according to claim 1, wherein
a brake rubber tube (80) extending upward from the brake device (72) is clamped at one point by a clamp member (86) attached to a bottom bridge (24), and
the ABS modulator (90) is placed at a position corresponding to a height of the clamp member (86).

3. A saddle-type vehicle (10) according to claim 1 or 2, wherein
a rear face portion (57) of the leg shield (56) has an area (57a) with a backwardly projecting profile in a cross section orthogonal to a vehicle width direction, and
the ABS modulator (90) is placed in correspondence to a position of the area (57a) with the backwardly projecting profile of the rear face portion (57) of the leg shield (56) .

4. A saddle-type vehicle (10) according to any one of claims 1 to 3, wherein
the ABS modulator (90) acts only on the front wheel (28), and
the saddle-type vehicle (10) includes the brake device (72) only on a side where the ABS modulator (90) is placed in a right-left direction of the front wheel (28).

5. A saddle-type vehicle (10) according to claim 3, wherein
the brake device (72) is located on a left side of the front wheel (28),
a first brake rubber tube (80a) extending from a front brake lever (108) mounted on a right side of a handlebar (30) connects to a first joint member (84a) which is fixedly supported on a left side of the head pipe (14),
a first brake metal tube (92a) extending from the first joint member (84a) connects to the ABS modulator (90),
a second brake metal tube (92b) extending from the ABS modulator (90) connects to a second joint member (84b) which is fixedly supported on the left side of the head pipe (14), and
a second brake rubber tube (80b) extends from the second joint member (84b) toward the brake device (72).

6. A saddle-type vehicle (10) according to claim 5, wherein the second joint member (84b) is placed below the first joint member (84a).

## Patentansprüche

1. Sattelfahrzeug (10), umfassend:
ein Kopfrohr (14), das ein Lenksystem (21) schwenkbar trägt;
einen Abwärtsrahmen (16), der sich von dem Kopfrohr (14) nach rückwärts und nach unten erstreckt;
einen Beinschutz (56), der den Abwärtsrahmen (16) bedeckt und auch Beine eines Fahrers von der Vorderseite schützt;
ein Vorderrad (28), das an einem unteren Ende des Lenksystems (21) montiert ist;
eine Hydraulikbremsvorrichtung (72) zum Ausüben einer Bremskraft auf das Vorderrad (28); und
einen ABS-Modulator (90) zum Einstellen der Bremskraft der Bremsvorrichtung (72); und der ABS-Modulator ist an dem Abwärtsrahmen innerhalb des Beinschutzes montiert;
**dadurch gekennzeichnet, dass** das Sattelfahrzeug umfasst:
eine Batterie (96), die vor dem Kopfrohr (14) montiert ist;
eine Sicherung (98), die an der linken Seite der Batterie (96) platziert ist; und
einen Hauptkabelbaum (100), der mit der Sicherung (98) verbunden ist;
dass der ABS-Modulator (90) zu der linken Seite des Abwärtsrahmens (16) in einer Rechts-Links-Richtung versetzt ist; und
dass der Hauptkabelbaum (100) so gelegt ist, dass er vor der Batterie (96) zu der rechten Seite des Abwärtsrahmens (16) in der Rechts-Links-Richtung verläuft.

2. Sattelfahrzeug (10) nach Anspruch 1, wobei
ein Bremsgummischlauch (80), der sich von der Bremsvorrichtung (72) nach oben erstreckt, an einem Punkt durch ein Klemmelement (86) festgeklemmt ist, das an einer Bodenbrücke (24) befestigt ist, und
der ABS-Modulator (90) an einer Position platziert ist, die einer Höhe des Klemmelements (86) entspricht.

3. Sattelfahrzeug (10) nach Anspruch 1 oder 2, wobei
ein Rückflächenabschnitt (57) des Beinschutzes (56) eine Fläche (57a) mit einem nach hinten ragenden Profil in einem Querschnitt orthogonal zu einer Fahrzeugbreitenrichtung aufweist und
der ABS-Modulator (90) entsprechend einer Position der Fläche (57a) mit dem nach hinten ragenden Profil des Rückflächenabschnitts (57) des Beinschutzes (56) platziert ist.

4. Sattelfahrzeug (10) nach einem der Ansprüche 1 bis 3, wobei
der ABS-Modulator (90) nur auf das Vorderrad (28) wirkt und
das Sattelfahrzeug (10) die Bremsvorrichtung (72) nur an einer Seite beinhaltet, wo der ABS-Modulator (90) in einer Rechts-Links-Richtung des Vorderrads (28) platziert ist.

5. Sattelfahrzeug (10) nach Anspruch 3, wobei
die Bremsvorrichtung (72) sich an einer linken Seite des Vorderrads (28) befindet, ein erster Bremsgummischlauch (80a), der sich von einem vorderen Bremshebel (108), der an einer rechten Seite einer Lenkstange (30) erstreckt, mit einem ersten Verbindungselement (84a) verbunden ist, das an einer linken Seite des Kopfrohrs (14) fixiert ist,
ein erstes Bremsmetallrohr (92a), das sich von dem ersten Verbindungselement (84a) erstreckt, mit dem ABS-Modulator (90) verbunden ist,
ein zweites Bremsmetallrohr (92b), das sich von dem ABS-Modulator (90) erstreckt, mit einem zweiten Verbindungselement (84b) verbunden ist, das an der linken Seite des Kopfrohrs (14) fixiert ist, und
ein zweiter Bremsgummischlauch (80b) sich von dem zweiten Verbindungselement (84b) zu der Bremsvorrichtung (72) erstreckt.

6. Sattelfahrzeug (10) nach Anspruch 5, wobei das zweite Verbindungselement (84b) unter dem ersten Verbindungselement (84a) platziert ist.

## Revendications

1. Véhicule à selle (10) comprenant :
un tube de tête (14) supportant de manière pivotante un système de direction (21) ;
un cadre inférieur (16) s'étendant vers l'arrière et vers le bas à partir du tube de tête (14) ;
un protège-jambes (56) couvrant le cadre inférieur (16) et couvrant également les jambes d'un pilote depuis l'avant ;
une roue avant (28) montée à une extrémité inférieure du système de direction (21) ;
un dispositif de frein hydraulique (72) pour appliquer une force de freinage sur la roue avant (28) ; et
un modulateur ABS (90) pour ajuster la force de freinage du dispositif de frein (72) ; et le modulateur ABS est monté sur le cadre inférieur dans le protège-jambes ;
**caractérisé en ce que** le véhicule à selle comprend :
une batterie (96) montée devant le tube de tête (14) ;
un fusible (98) placé sur le côté gauche de la batterie (96) ; et
un faisceau principal (100) relié au fusible (98) ;
**en ce que** le modulateur ABS (90) est décalé vers le côté gauche du cadre inférieur (16) dans une direction droite-gauche ; et
**en ce que** le faisceau principal (100) est disposé de manière à passer devant la batterie (96) vers le côté droit du cadre inférieur (16) dans la direction droite-gauche.

2. Véhicule à selle (10) selon la revendication 1, dans lequel
un tube de frein en caoutchouc (80) s'étendant vers le haut à partir du dispositif de frein (72) est serré en un point par un élément de serrage (86) attaché à un pont du bas (24), et
le modulateur ABS (90) est placé à une position correspondant à une hauteur de l'élément de serrage (86).

3. Véhicule à selle (10) selon la revendication 1 ou 2, dans lequel
une partie face arrière (57) du protège-jambes (56) présente une zone (57a) avec un profil faisant saillie vers l'arrière dans une coupe transversale orthogonale à une direction de largeur de véhicule, et
le modulateur ABS (90) est placé en correspondance par rapport à une position de la zone (57a) avec le profil faisant saillie vers l'arrière de la partie face arrière (57) du protège-jambes (56).

4. Véhicule à selle (10) selon l'une quelconque des revendications 1 à 3, dans lequel
le modulateur ABS (90) agit uniquement sur la roue avant (28), et
le véhicule à selle (10) inclut le dispositif de frein (72) uniquement sur un côté où le modulateur ABS (90) est placé dans une direction droite-gauche de la roue avant (28).

5. Véhicule à selle (10) selon la revendication 3, dans lequel
le dispositif de frein (72) est situé sur un côté gauche de la roue avant (28), un premier tube de frein en caoutchouc (80a) s'étendant à partir d'un levier de frein avant (108) monté sur un côté droit d'un guidon (30) est relié à un premier élément de raccord (84a) qui est supporté de manière fixe sur un côté gauche du tube de tête (14),
un premier tube de frein en métal (92a) s'étendant à partir du premier élément de raccord (84a) est relié au modulateur ABS (90),
un second tube de frein en métal (92b) s'étendant à partir du modulateur ABS (90) est relié à un second élément de raccord (84b) qui est supporté de manière fixe sur le côté gauche du tube de tête (14), et
un second tube de frein en caoutchouc (80b) s'étend à partir du second élément de raccord (84b) vers le dispositif de frein (72).

6. Véhicule à selle (10) selon la revendication 5, dans lequel le second élément de raccord (84b) est placé en dessous du premier élément de raccord (84a).
